# EUROPEAN PATENT APPLICATION

(11) **EP 2 634 891 A2**
(43) Date of publication of application: **04.09.2013**
(21) Application number: 13156888.3
(22) Date of filing: 27.02.2013
(51) Int. Cl.: H02J 7/02

(54) **Wireless charging control method and wireless charging apparatus employing the same**

(30) Priority: 29.02.2012 KR 20120020957
(71) Applicant: Samsung Electronics Co., Ltd, Gyeonggi-do 443-742 (KR)
(72) Inventor: Kang, Noh-Gyoung, 443-742 Gyeonggi-do (KR); Choi, Jun-Il, 443-742 Gyeonggi-do (KR); Won, Eun-Tae, 443-742 Gyeonggi-do (KR)
(74) Representative: Jenkins, Richard Gavin

(57) **Abstract**

A method and apparatus for controlling charging of a battery by a wireless power receiving apparatus, using a charging power provided from a wireless power transmission device are provided. The method includes initiating charging of a battery by using a charging power provided by a resonator for wirelessly receiving power; determining whether charging of the battery has been completed; and terminating, when the charging of the battery has been completed, an operation of the resonator.

## Description

### 1. Field of the Invention

The present invention relates generally to a charging control method and apparatus, and more particularly, to a method and apparatus for controlling a supply of wireless charging power.

### 2. Description of the Related Art

In order for a mobile terminal to operate, power must be consistently supplied to the mobile terminal. To this end, a battery is included in the mobile terminal and is usually charged through a charger. Research on non-contact charging and wireless charging schemes has been conducted, in order to improve the portability of mobile terminals.

In particular, a resonance type wireless power transmission scheme, which is able to charge a device at a relatively long distance (in contrast a typical wireless charging scheme using inductive coupling at a short distance) has been recently proposed, and research for the resonance type wireless power transmission scheme is currently ongoing.

The resonance type wireless power transmission scheme is based on Evanescent Wave Coupling wherein, when two mediums resonate with each other at the same frequency, electromagnetic waves move from one medium to the other medium through a short-distance electromagnetic field. In the resonance type wireless power transmission scheme, a charging station connected to a power source generates an electromagnetic field, and a wireless power receiving apparatus designed with the same resonance frequency in a megahertz (MHz) band approaches the charging station within the generated electromagnetic field. When the wireless power receiving apparatus enters the electromagnetic field, a kind of energy tunnel is generated between the two sides, so that the wireless power receiving apparatus can be charged even when the portable apparatus (i.e., the wireless power receiving apparatus) is located several meters from the charging station. Since the energy generated in the resonance type wireless power transmission scheme is non-radiative and is based on the electromagnetic field, the energy is only transferred to an apparatus that has the same resonance frequency. Further, an unused portion of the energy is absorbed back into the electromagnetic field, instead of being spread into the air. Therefore, unlike other electromagnetic waves, the electromagnetic waves generated in the resonance type wireless power transmission scheme do not have any effect on surrounding machines or bodies.

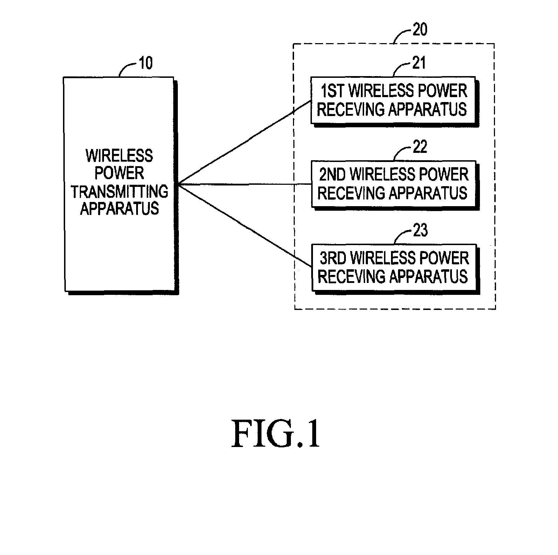

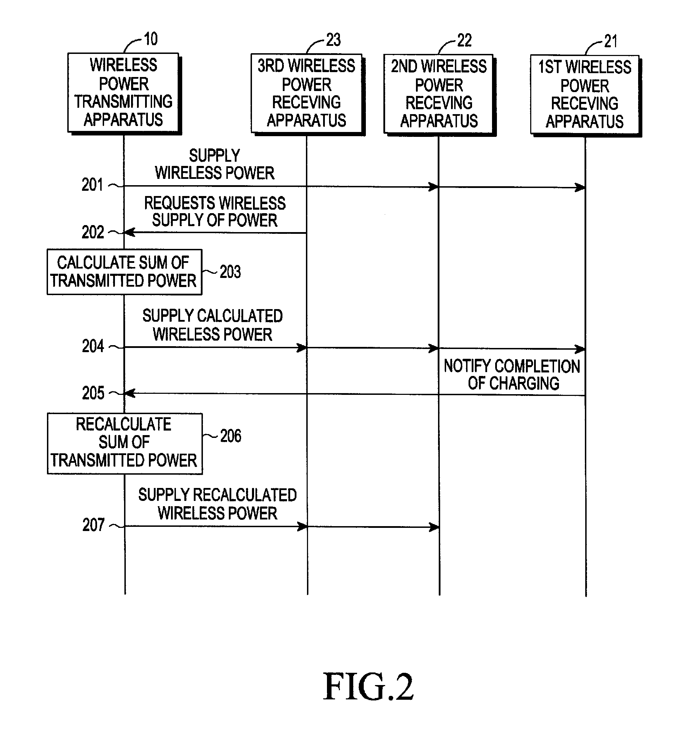

FIG. 1 is a block diagram illustrating a construction of a conventional resonance type wireless power transmission system, and FIG. 2 is a signal flow diagram illustrating an operation of a conventional resonance type wireless power transmission system.

Referring to FIG. 1, a wireless power transmitting apparatus 10 wirelessly supplies power to a plurality of wireless power receiving apparatuses 20. According to an example of a conventional sequence of operations, when wirelessly supplying power to first and second wireless power receiving apparatuses 21 and 22, the wireless power transmitting apparatus 10 receives a request for wireless power supply from a third wireless power receiving apparatus 23, and additionally supplies the wireless power to the third wireless power receiving apparatus 23. Further, while the second and third wireless power receiving apparatuses 22 and 23 are receiving the wireless power supplied from the wireless power transmitting apparatus 10, the charging of the first wireless power receiving apparatus 21 is completed.

Specifically, as shown in FIG. 2, the wireless power transmitting apparatus 10 wirelessly supplies power to the first and second wireless power receiving apparatus 21 and 22, in step 201. Thereafter, the third wireless power receiving apparatus 23 requests the wireless power transmitting apparatus 10 to supply wireless power, in step 202. Accordingly, the wireless power transmitting apparatus 10 calculates the charging power required by the first, second and third wireless power receiving apparatuses 21, 22, and 23, and calculates the sum of the wireless power to be transmitted to the first, second and third wireless power receiving apparatuses 21, 22, and 23, in step 203. Then, the wireless power transmitting apparatus 10 transmits the sum of the wireless power calculated in step 203 to the first, second and third wireless power receiving apparatuses 21, 22, and 23, in step 204. Thereafter, when the charging of the first wireless power receiving apparatus 21 has been completed, the first wireless power receiving apparatus 21 notifies the wireless power transmitting apparatus 10 of the completion of the charging, in step 205. In response to this notification, the wireless power transmitting apparatus 10 calculates the charging power required by the second and third wireless power receiving apparatuses 22 and 23, and calculates the sum of the wireless power to be transmitted to the second and third wireless power receiving apparatuses 22 and 23, in step 206. Then, the wireless power transmitting apparatus 10 transmits the sum of the wireless power calculated in step 206 to the second and third wireless power receiving apparatuses 22 and 23, in step 207.

As described above, a conventional wireless power transmission system wirelessly supplies power to a plurality of wireless power receiving apparatuses 20. However, the conventional wireless power transmission system has a problem in that the conventional system cannot individually control the wireless power provided to each of the plurality of wireless power receiving apparatuses 20. Further, in wirelessly supplying power to the plurality of wireless power receiving apparatuses 20 by the wireless power transmitting apparatus 10, the wireless power transmitting apparatus 10 merely transmits the sum of the wireless power requested by the plurality of wireless power receiving apparatuses 20, regardless of any difference between powers required by the respective wireless power receiving apparatuses 20. Therefore, under some circumstances, the power transmitted by the wireless power transmitting apparatus 10 may be less than the power required for charging the wireless power receiving apparatuses 20, which may make it impossible to perform a normal charging.

### SUMMARY OF THE INVENTION

Accordingly, an aspect of the present invention is to address the above-mentioned problems occurring in the prior art, and provide at least the advantages described below. Another aspect of the present invention is to provide a method for providing wireless power to a plurality of wireless power receiving apparatuses by a single wireless power supplying apparatus.

In accordance with an aspect of the present invention, a method of controlling charging of a battery by a wireless power receiving apparatus, using a charging power provided from a wireless power transmission device is provided. The method includes initiating charging of a battery by using a charging power provided by a resonator for wirelessly receiving power; determining whether charging of the battery has been completed; and terminating, when the charging of the battery has been completed, an operation of the resonator.

In accordance with another aspect of the present invention, a wireless power receiving apparatus for wirelessly receiving electric power from a wireless power transmitting apparatus through an electromagnetic coupling with the wireless power transmitting apparatus is provided. The wireless power receiving apparatus includes a reception resonator set to a resonance frequency equal to a resonance frequency of a wireless power transmission apparatus, the reception resonator being coupled with a transmission resonator of the wireless power transmitting apparatus and receiving electric power from the transmission resonator; a switch connected to the reception resonator; and a charging controller for supplying the electric power received through the reception resonator to a battery, determining whether charging of the battery has been completed, controlling the switch such as to cease operation of the reception resonator upon determining that charging of the batter has completed.

In accordance with still another aspect of the present invention, a wireless power transmitting apparatus for wirelessly supplying electric power to a wireless power receiving apparatus through an electromagnetic coupling with the wireless power receiving apparatus is provided. The wireless power transmitting apparatus includes a transmission resonator set to a resonance frequency equal to a resonance frequency of a wireless power receiving apparatus, the transmission resonator being coupled with a reception resonator of the wireless power receiving apparatus and providing electric power to the reception resonator; and a transmission controller for controlling an operation of the transmission resonator according to a charging state of the wireless power receiving apparatus.

### BRIEF DESCRIPTION OF THE DRAWINGS

The above and other aspects, features and advantages of the present invention will be more apparent from the following detailed description taken in conjunction with the accompanying drawings, in which:
FIG. 1 is a block diagram illustrating an example of a conventional resonance type wireless power transmission system;
FIG. 2 is a signal flow diagram illustrating an example of an operation of a conventional resonance type wireless power transmission system;
FIG. 3 is a block diagram illustrating a construction of a wireless power receiving apparatus according to an embodiment of the present invention;
FIG. 4 is a flowchart illustrating a process of a charging control method according to an embodiment of the present invention; and
FIG. 5 is a block diagram illustrating a construction of a wireless power transmitting apparatus according to an embodiment of the present invention.

### DETAILED DESCRIPTION OF EMBODIMENTS OF THE PRESENT INVENTION

Hereinafter, the embodiments of the present invention are described in detail with reference to the accompanying drawings. Further, various specific definitions found in the following description are provided to help general understanding of the present invention, and it will be understood by those skilled in the art that various changes and modifications can be made thereto within the technical spirit and scope of the present invention. In the following description, a detailed explanation of known related functions and constitutions may be omitted to avoid obscuring the subject matter of the present invention.

The present invention has been made to solve the above-mentioned problems and provides a method and an apparatus for controlling a wireless power receiving apparatuses by connecting an on/off switch to a reception resonator of the wireless power receiving apparatus.

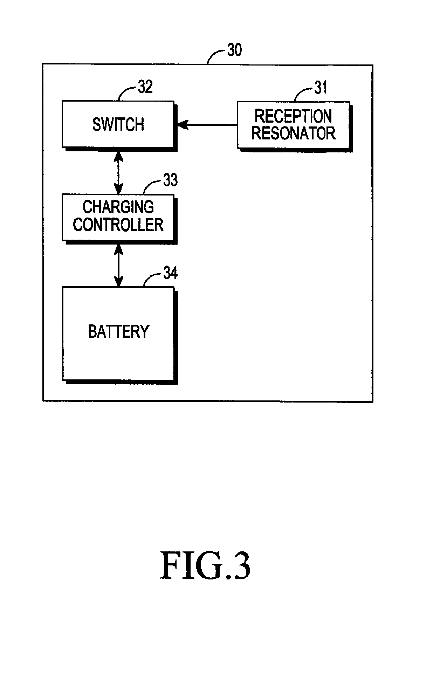

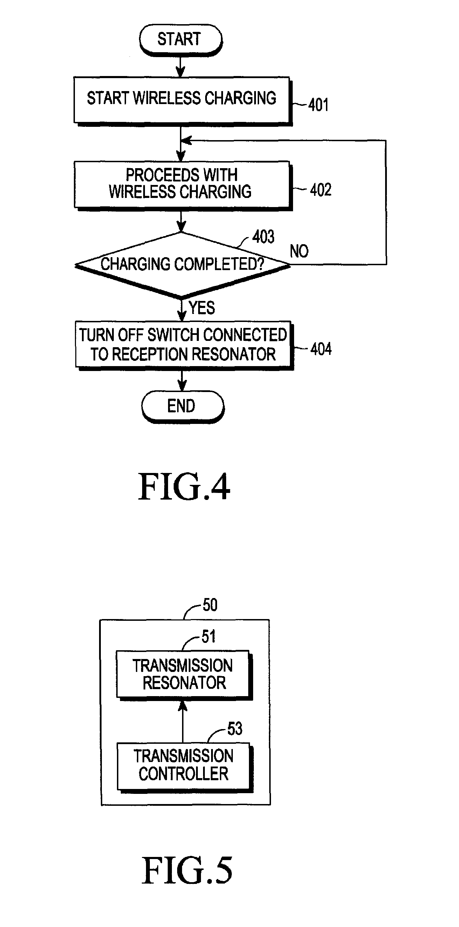

FIG. 3 is a block diagram illustrating a construction of a wireless power receiving apparatus 30 according to an embodiment of the present invention, and FIG. 5 is a block diagram illustrating a construction of a wireless power transmitting apparatus 50 according to an embodiment of the present invention.

Referring to FIG. 3, the wireless power receiving apparatus 30 includes a reception resonator 31, a switch 32, a charging controller 33, and a battery 34.

The reception resonator 31 is set to have the same resonance frequency as a resonance frequency of a transmission resonator 51 of the wireless power transmitting apparatus 50. Accordingly, the reception resonator 31 is coupled and resonates with the transmission resonator 51. When the reception resonator 31 of the wireless power receiving apparatus 30 is coupled and resonates with the transmission resonator 51 of the wireless power transmitting apparatus 50, wireless power is transferred from the wireless power transmitting apparatus 50 to the wireless power receiving apparatus 30, and the wireless power receiving apparatus 30 is thus charged.

The switch 32 is connected with the reception resonator 31, so as to control the coupling between the reception resonator 31 and the transmission resonator 51 of the wireless power transmitting apparatus 50.

When the battery 34 has been completely charged, the charging controller 33 interrupts the connection between the reception resonator 31 and the battery 34 in order to terminate the connection between the reception resonator 31 and the battery 34. To this end, the charging controller 33 checks whether the charging of the battery 34 has been completed. When the charging has been completed, the charging controller 33 controls the switch 32 (i.e., opens or closes the switch 32) so as to interrupt the coupling between the reception resonator 31 and the transmission resonator 51 of the wireless power transmitting apparatus 50.

FIG. 4 is a flowchart illustrating a charging control method according to an embodiment of the present invention.

Referring to FIG. 4, in step 401, the wireless power receiving apparatus 30 starts wireless charging by receiving power transmitted from the wireless power transmitting apparatus 50 and supplying the charging power to the battery 34.

Further, in step 402, the wireless power receiving apparatus 30 continues receiving wireless charging power while consistently monitoring at least one of the voltage of the battery 34 and the charging current provided to the battery 34. Based upon the monitoring, the wireless power receiving apparatus 30 checks whether the charging of the battery 34 has been completed in step 403.

Upon a determination that charging has been completed, in step 403, the switch 32 connected to the reception resonator 31 of the wireless power receiving apparatus 30 is turned off, in step 404. As a result, the coupling between the reception resonator 31 and the transmission resonator 51 of the wireless power transmitting apparatus 50 is terminated, and the wireless power receiving apparatus 30 does not receive any more wireless power from the wireless power transmitting apparatus 50.

Therefore, even when the wireless power transmitting apparatus 50 consistently provides the charging power that it can provide, the wireless power receiving apparatus 30 prevents an unnecessary supply of power to the battery 34 of the wireless power receiving apparatus 30, after battery 34 is completely charged. Further, since unnecessary charging is prevented as described above, when there are a plurality of wireless power receiving apparatuses 30, the wireless power transmitting apparatus 50 can more intensively provide power to only the wireless power receiving apparatuses 30 that still require charging. Accordingly, charging power is more efficiently supplied to the plurality of wireless power receiving apparatuses 30.

Referring to FIG. 5, the wireless power transmitting apparatus 50 includes a transmission resonator 51 and a transmission controller 53 according to an embodiment of the present invention.

The transmission resonator 51 is set to have a predetermined resonance frequency, for example, the same resonance frequency as that of the reception resonator 31 of the wireless power receiving apparatus 30, and transmits a wireless power through the resonance frequency.

The transmission controller 53 controls the transmission of power to the wireless power receiving apparatus 30 by controlling the operation of the transmission resonator 51. Specifically, the transmission controller 53 monitors the wireless power transmitted through the transmission resonator 51, so as to determine whether the wireless power is transmitted to the wireless power receiving apparatus 30. When the reception resonator 31 of the wireless power receiving apparatus 30 is not coupled with the transmission resonator 51 and the wireless power is not transmitted to the wireless power receiving apparatus 30 at all, the transmission controller 53 stops the operation of the transmission resonator 51.

According to an embodiment of the present invention, through communication with the wireless power receiving apparatus 30, the transmission controller 53 receives a charging power supply request from the wireless power receiving apparatus 30. In response to the charging power supply request, the transmission controller 53 determines whether to permit the transmission of power to the wireless power receiving apparatus 30, and, from among a plurality of wireless power receiving apparatuses 30, the transmission controller 53 selectively provides only to the wireless power to wireless power receiving apparatuses 30 for which the transmission of power is permitted.

In the present example according to an embodiment of the present invention, the transmission controller 53 controls power transmission to the wireless power receiving apparatus 30 by monitoring the wireless power transmitted through the transmission resonator 51. However, according to another embodiment of the present invention, the transmission controller 53 receives a message, indicating that the charging has been completed, from at least one of the wireless power receiving apparatuses 30 receiving electric power through the communication with the wireless power receiving apparatus 30. In this event, the transmission controller 53 of the wireless power transmitting apparatus 50 stops supplying power to the corresponding wireless power receiving apparatus 30. According to this embodiment, when the transmission controller 53 has received messages indicating that the charging has been completed, from all the wireless power receiving apparatuses 30 that were charging, the transmission controller 53 stops the transmission resonator 51 from transmitting any more power.

According to a charging control method according to an embodiment of the present invention, a wireless power transmitting apparatus can avoid unnecessarily providing electric power to the wireless power receiving apparatus having a completely charged battery.

In addition, the wireless power transmitting apparatus can provide a necessary quantity of power to the wireless power receiving apparatus, which enables an efficient supply of charging power.

While the present invention has been shown and described with reference to certain embodiments and drawings thereof, it will be understood by those skilled in the art that various changes in form and details may be made therein without departing from the spirit and scope of the invention as defined by the appended claims and their equivalents.

## Claims

1. A method of controlling charging of a battery by a wireless power receiving apparatus, using a charging power provided from a wireless power transmission device, wherein the method comprises:
initiating charging of a battery by using a charging power provided by a resonator for wirelessly receiving power;
determining whether charging of the battery has been completed; and
terminating, when the charging of the battery has been completed, an operation of the resonator.

2. The method as claimed in claim 1, wherein terminating the operation of the resonator comprises turning off an operation switch connected to the resonator.

3. A wireless power receiving apparatus for wirelessly receiving electric power from a wireless power transmitting apparatus through an electromagnetic coupling with the wireless power transmitting apparatus, wherein the wireless power receiving apparatus comprises:
a reception resonator set to a resonance frequency equal to a resonance frequency of a wireless power transmission apparatus, the reception resonator being coupled with a transmission resonator of the wireless power transmitting apparatus and receiving electric power from the transmission resonator;
a switch connected to the reception resonator; and
a charging controller for supplying the electric power received through the reception resonator to a battery, determining whether charging of the battery has been completed, and controlling the switch to cease operation of the reception resonator upon determining that charging of the battery has completed.

4. A wireless power transmitting apparatus for wirelessly supplying electric power to a wireless power receiving apparatus through an electromagnetic coupling with the wireless power receiving apparatus, wherein the wireless power transmitting apparatus comprises:
a transmission resonator set to a resonance frequency equal to a resonance frequency of a wireless power receiving apparatus, the transmission resonator being coupled with a reception resonator of the wireless power receiving apparatus and providing electric power to the reception resonator; and
a transmission controller for controlling an operation of the transmission resonator according to a charging state of the wireless power receiving apparatus.

5. The wireless power transmitting apparatus as claimed in claim 4, wherein the transmission controller checks whether the wireless power transmitting apparatus is currently transmitting wireless power is transmitted to the wireless power receiving apparatus, and controls the operation of the transmission resonator according to a result of the checking.

6. The wireless power transmitting apparatus as claimed in claim 5, wherein the transmission controller stops the operation of the transmission resonator, upon determining that the wireless power is not transmitted to the wireless power receiving apparatus.

7. The wireless power transmitting apparatus claimed in claim 5 or 6, wherein the transmission controller controls the operation of the transmission controller according to communication with the wireless power receiving apparatus.

8. The wireless power transmitting apparatus as claimed in claim 7, wherein the transmission controller stops the operation of the transmission controller when the transmission controller has received, from a plurality of wireless power receiving apparatuses, including the wireless power receiving apparatus, that were receiving the wireless power from the wireless transmitting apparatus, a message indicating that charging of all of the plurality of wireless power receiving apparatuses has been completed.

9. The wireless power transmitting apparatus as claimed in claim 7, wherein the transmission controller starts the operation of the transmission controller in response to a charging power supply request received from the wireless power receiving apparatus.

10. The wireless power transmitting apparatus as claimed in claim 9, wherein the transmission controller selectively provides, in response to the charging power supply request, the wireless power to a wireless power receiving apparatus according to whether the wireless power receiving apparatus has permission to receive charging power from the wireless power transmitting apparatus.
